# EUROPÄISCHE PATENTSCHRIFT

(11) **EP 2 893 197 B1**
(45) Veröffentlichungstag und Bekanntmachung des Hinweises auf die Patenterteilung: **22.11.2017**
(21) Anmeldenummer: 13756826.7
(22) Anmeldetag: 29.08.2013
(51) Int. Cl.: F15B 11/10, F15B 13/04

(54) **GEREGELTE PROPORTIONAL-DREIWEGEVENTILEINHEIT**
REGULATED PROPORTIONAL THREE-WAY VALVE UNIT
UNITÉ DE VANNE PROPORTIONNELLE À TROIS VOIES RÉGULÉE

(30) Priorität: 07.09.2012 DE 102012017714
(43) Veröffentlichungstag der Anmeldung: 15.07.2015
(73) Patentinhaber: Hoerbiger Automatisierungstechnik Holding GmbH, 86972 Altenstadt (DE)
(72) Erfinder: HALLER, Daniel, 70569 Stuttgart (DE); SCHROBENHAUSER, Max, 86971 Peiting (DE); SCHAIBLE, Jochen, 6331 Hünenberg (CH)
(74) Vertreter: Grättinger Möhring von Poschinger Patentanwälte Partnerschaft
(86) Internationale Anmeldenummer: PCT/EP2013/002598
(87) Internationale Veröffentlichungsnummer: WO 2014/037089

(56) Entgegenhaltungen:
- DE-A1- 2 654 219
- DE-A1-102007 058 518
- DE-A1-102009 023 706

## Beschreibung

Die vorliegende Erfindung betrifft eine geregelte Proportional-Dreiwegeventileinheit mit einer zwei Einzelventile umfassenden Ventilgruppe, einer die Einzelventile der Ventilgruppe betätigenden Betätigungseinrichtung und einer auf die Betätigungseinrichtung wirkenden, einen Steuersignaleingang aufweisenden Regeleinheit. Insbesondere betrifft die vorliegende Erfindung eine derartige geregelte Proportional-Dreiwegeventileinheit mit den im Oberbegriff des Anspruchs 1 angegebenen Merkmalen.

In der Fluidtechnik werden zur gezielten Beeinflussung der Fluidströmung Ventileinheiten eingesetzt. Dies gilt beispielsweise für die Beeinflussung der Beaufschlagung eines fluidisch betätigten Antriebselements, welches seinerseits beispielsweise der Betätigung eines Absperrorgans dienen kann. In diversen Anwendungen kommen dabei drei Anschlüsse aufweisende Wegeventileinheiten zum Einsatz, bei denen typischerweise ein Anschluss - je nach der Schaltstellung der Wegeventileinheit - mit dem einen und/oder dem anderen der beiden verbleibenden Anschlüsse strömungstechnisch verbunden oder aber gegenüber beiden weiteren Anschlüssen gesperrt sein kann. Mit solcher Funktion sind nicht nur Schieberventile bekannt, insbesondere solche, bei denen ein einheitlicher, innerhalb eines die drei Anschlüsse aufweisenden Ventilgehäuses verschiebbarer Schieber - je nach seiner Stellung - die besagten Fluidverbindungen öffnet oder sperrt. Vielmehr sind auch Dreiwegeventileinheiten bekannt, die eine zwei baulich unabhängige Einzelventile umfassende Ventilgruppe aufweisen, wobei die beiden Einzelventile der Ventilgruppe mittels einer Betätigungseinrichtung betätigbar sind und typischerweise einer von drei Anschlüssen sowohl mit einer Ventilkammer des einen Einzelventils als auch mit einer Ventilkammer des anderen Einzelventils strömungstechnisch verbunden ist (vgl. EP 2133546 A1). In besonderer Weise können dabei - anders als gemäß der EP 2133546 A1) - die beiden Einzelventile dergestalt vorgespannt sein, dass das eine Einzelventil - ohne Beaufschlagung eines diesem zugeordneten Aktuators - eine geschlossene Stellung einnimmt, während das andere Einzelventil - ohne Beaufschlagung des diesem zugeordneten Aktuators - eine geöffnete Stellung einnimmt. Eine solche geregelte Proportional-Dreiwegeventileinheit, welche auch die übrigen im Oberbegriff des Anspruchs 1 angegebenen Merkmale aufweist, ist beispielsweise bekannt aus der gattungsbildenden DE 2654219 A1.

Die vorliegende Erfindung ist darauf gerichtet, eine die eingangs angegebenen Merkmale aufweisende und auch im Übrigen gattungsgemäß ausgeführte geregelte Proportional-Dreiwegeventileinheit bereitzustellen, die sich bei einem vergleichsweise geringen baulichen Aufwand durch ein hohes Maß an Betriebssicherheit und Zuverlässigkeit sowie ein gutes Regelverhalten auszeichnet.

Gelöst wird diese Aufgabenstellung gemäß der vorliegenden Erfindung durch die in Anspruch 1 im Einzelnen angegebene geregelte Proportional-Dreiwegeventileinheit. In funktionaler Kombination und synergetischem Zusammenwirken mit den weiteren für die erfindungsgemäße Proportional-Dreiwegeventileinheit bestimmenden Merkmalen ist somit für letztere unter anderem charakteristisch, dass die beiden - bevorzugt in einem gemeinsamen Gehäuse untergebrachten - Einzelventile der Ventilgruppe als zwei einander gegenüberliegend angeordnete Sitzventile mit gegenläufig bewegbaren Ventilspindeln ausgeführt sind, welche mittels einer Vorspanneinheit gegensinnig vorgespannt sind. Dabei weist die Betätigungseinrichtung einen für beide Sitzventile gemeinsamen, auf die beiden Ventilspindeln einwirkenden Aktuator auf, der - in Abhängigkeit von seiner Beaufschlagung mit einer Eingangsgröße - die Lage der Ventilspindeln entgegen der Wirkung der Vorspanneinheit verändert. Unter der Wirkung der - die beiden Ventilspindeln zueinander gegensinnig vorspannenden - Vorspanneinheit ist bei inaktiver Betätigungseinheit ein erstes der Sitzventile geöffnet und das zweite Sitzventil geschlossen. Dabei sind gemäß der Erfindung weiterhin die Betätigungseinrichtung und die Vorspanneinrichtung dergestalt aufeinander abgestimmt, dass bei einer stetigen Veränderungen der dem Aktor der Betätigungseinrichtung zugeführten Eingangsgröße von einem ersten Betriebswert zu einem zweiten Betriebswert zueinander versetzt (d.h. in einem sequentiellen Betätigungsablauf) zunächst das erste Sitzventil fortschreitend über seinen gesamten Betriebshub geschlossen und erst anschließend das zweite Sitzventil fortschreitend über seinen gesamten Betriebshub geöffnet wird, so dass - bei entsprechender Änderung der besagten Eingangsgröße - sich das Schließen des ersten Sitzventils einerseits und das Öffnen des zweiten Sitzventils andererseits in zwei unterschiedlichen Bereichen für die dem Aktor der Betätigungseinrichtung zugeführte Eingangsgröße vollzieht. Auf diese Weise ist sichergestellt, dass jedem Wert der Eingangsgröße für den Aktor eindeutig genau eine bestimmte Stellung beider Einzelventile der Dreiwegeventileinheit zugeordnet ist. In wiederum weiterer Konsequenz kann somit auch jedem der Regeleinheit zugeführten Sollwert eindeutig genau ein Betriebspunkt der Ventilgruppe zugeordnet sein. Durch einen (einzigen) Sensor, welcher den Relativabstand der beiden Ventilspindeln zueinander erfasst, wird der Schaltzustand der Ventilgruppe eindeutig und exakt ermittelt. Das von dem Sensor bereitgestellte Signal, welches demnach Aufschluss geben kann über die Stellung beider Sitzventile und somit den aktuellen Betriebspunkt der Ventilgruppe, wird in regelungstechnisch besonders attraktiver Weise - als Istwert - auf die Regeleinheit zurückgeführt, wodurch in einfacher und zuverlässiger Form ein Abgleich des tatsächlichen Betriebspunkts der Ventilgruppe mit dem der Regeleinheit zugeführten Sollwert erfolgen kann. Durch die Verwendung eines einzigen, beiden Sitzventilen gemeinsamen Sensors sind insbesondere Interdependenzen ausgeschlossen, wodurch sich ein besonders stabiles Regelverhalten ergibt. In baulicher Hinsicht ist dabei besonders günstig, wenn der Sensor auf einer Steuerplatine angeordnet ist, welche ihrerseits zwischen den beiden Ventilspindeln angeordnet ist.

Durch den proportionalen Betrieb der Ventilgruppe wird eine besonders hohe, gegenüber einer pulsweitenmodulierten Ansteuerung des über die Ventilgruppe beaufschlagten fluidischen Verbrauchers signifikant gesteigerte Lebensdauer der Komponenten erreicht, und zwar nicht zuletzt dadurch, dass sämtliche Ventile im Betrieb vorwiegend eine Teilauslenkung erfahren und nur selten über ihren gesamten Bewegungsbereich betätigt werden. Zudem zeichnet sich die erfindungsgemäße Ventileinheit, anders als dies für Schieberventile verwendende Dreiwegeventileinheiten gilt, durch eine gänzlich leckagefreie (oder allenfalls eine vernachlässigbare Leckage aufweisende) Ventilgruppe aus, was insbesondere unter Gesichtspunkten der Effizienz ein herausragender Vorteil ist, weil hierdurch ein tatsächliches "Sperren" bzw. "Halten" eines angeschlossenen Verbrauchers (s.u.) ohne permanente Druckfluid-Beaufschlagung möglich ist.

Besonders ausgeprägt sind die in Anwendung der vorliegenden Erfindung erzielbaren Vorteile, wenn bei der weiter oben dargelegten Veränderung der Eingangsgröße für den Aktor zwischen dem Schließen des ersten Sitzventils und dem Öffnen des zweiten Sitzventils ein Bereich ("Sperrbereich") besteht, in dem beide Sitzventile geschlossen sind. Mit anderen Worten: Bei einer Veränderung der Eingangsgröße für den Aktor beginnt das Öffnen des zweiten Sitzventils bevorzugt nicht mehr oder weniger gleichzeitig, d.h. bei dem selben Wert der Eingangsgröße, mit dem vollständigen Schließen des ersten Sitzventils. Sondern es besteht vielmehr für die Eingangsgröße ein mehr oder weniger ausgeprägter Bereich, innerhalb dessen beide Sitzventile geschlossen sind. Besonders bevorzugt nimmt der betreffende Sperrbereich dabei zwischen 10% und 30% des von der Eingangsgröße insgesamt erreichbaren Bereichs ein. Dergleichen ist für ein stabiles Betriebsverhalten von großem Vorteil. Dieser Sperrbereich kann insbesondere dazu genutzt werden, einen über die erfindungsgemäße Ventilgruppe beaufschlagten fluidischen Verbraucher (z.B. Pneumatikzylinder) zu sperren bzw. zu halten. Genau dieser Bereich, innerhalb dessen der Verbraucher gesperrt ist bzw. gehalten wird, kann über den Sensor überwacht werden. Da betriebsbedingte Störeinflüsse über den Sensor erkannt und - infolge der Rückführung des Messwerts auf die Regeleinheit - durch den Regelkreis kompensiert werden können, braucht der Halte- bzw. Sperrbereich mit nur geringeren Sicherheitsreserven ausgeführt werden, d.h. kann relativ schmal sein. Folglich stehen entsprechend größere Bereiche für die Verstellung der beiden Sitzventile zur Verfügung, so dass diese mit (zumindest bereichsweise) relativ flachen Kennlinien ausgeführt werden können, was eine besonders feinfühlige Einstellung der Durchströmung der Ventilgruppe erlaubt. In weiterer Konsequenz können Leckagen im Zustand "Halten" unabhängig von den Einsatzbedingungen immer minimal bleiben, da der Haltezustand über den Regelkreis immer in der optimalen Mittenposition herbeigeführt werden kann. Und über die Überwachung des Halte- bzw. Sperrbereichs ergeben sich erweiterte Diagnosemöglichkeiten, über die insbesondere Veränderungen in der Dynamik, dem Ansprechverhalten, etwaige Verschleißerscheinungen oder Verschmutzungen an den Ventilsitzen bis hin zu Beeinträchtigungen der Gesamtfunktion frühzeitig erkannt werden können.

In bevorzugter Weiterbildung der vorliegenden Erfindung ist eine fluidische, insbesondere eine pneumatische Betätigungseinrichtung vorgesehen, welche zwei aus einem gemeinsamen Steuerraum beaufschlagte Druck-Weg-Wandler aufweist, von denen ein erster (ggf. mittelbar) auf die Ventilspindel des ersten Sitzventils und ein zweiter (ggf. mittelbar) auf die Ventilspindel des zweiten Sitzventils wirkt. Dergleichen ist insbesondere dann von Vorteil, wenn die fluidische Betätigungseinrichtung aus der selben Fluidversorgung (z.B. Druckluftquelle) gespeist werden kann, welche auch das von der Ventilgruppe zu beeinflussende Arbeitsfluid bereitstellt. Die im Rahmen der vorliegenden Erfindung genutzte Abstimmung der beiden Druck-Weg-Wandler aufeinander im Sinne der dargelegten Hierarchie bzw. Betätigungssequenz lässt sich dabei erreichen durch eine geeignete konstruktive Auslegung der Flächenverhältnisse der beiden Druck-Weg-Wandler, auf welche der in dem Steuerraum herrschende Steuerdruck wirkt, wie auch durch Abstimmung der auf die beiden Sitzventile wirkenden Vorspannkräfte sowohl aufeinander als auch auf die jeweils zugeordnete wirksame Fläche des betreffenden Druck-Weg-Wandlers. So kann insbesondere die Vorspanneinrichtung auf die beiden Ventilspindeln mit unterschiedlichen Vorspannkräften wirken. Ein für die Betriebssicherheit interessanter Effekt besteht dabei darin, dass in dem Steuerraum - aus welchem Grund auch immer - entstehende Druckschwankungen, weil sie auf die beiden Druck-Weg-Wandler wirken, sich über den Sensor detektieren lassen, so dass das von dem Sensor bereitgestellte Signal auch Aufschluss geben kann über den Betriebszustand der Fluidversorgung. Umgekehrt können, weil das Sensorsignal auf die Regeleinheit rückgeführt wird, Schwankungen des Betriebsdrucks ausgeregelt werden, so dass der angestrebte Fluiddurchsatz durch die Ventilgruppe auch bei möglichen Schwankungen des Betriebsdrucks zuverlässig eingehalten werden kann. Die vorstehend erläuterte pneumatische Ausführung der Betätigungseinrichtung ist indessen keinesfalls zwingend; vielmehr kommen im Rahmen der vorliegenden Erfindung - unter anderen Voraussetzungen - mit Vorteil auch andersartige Ausführungen der Betätigungseinrichtung in Betracht, beispielsweise Betätigungseinrichtungen elektromagnetischer Art nach dem Spule-Anker-Prinzip.

Namentlich im Falle einer fluidisch ausgeführten Betätigungseinrichtung ist, gemäß einer anderen bevorzugten Weiterbildung der vorliegenden Erfindung, die Ventileinheit zweistufig ausgeführt, d.h. die vorstehend erläuterte Ventilgruppe Teil einer zweistufigen Ventileinheit, welche ferner eine zwischen die Regeleinheit und die Ventilgruppe geschaltete elektro-fluidische Vorstufe umfasst, welche ihrerseits einen mit der Regeleinheit verbundenen elektrischen Signaleingang, einen Druckfluideingang, einen mit dem Steuerraum verbundenen Steuerdruckausgang und ein zwischen dem Druckfluideingang und dem Steuerdruckausgang angeordnetes proportionales Pilotventil umfasst. Besonders vorteilhaft ist eine derartige zweistufige Ausführung der Ventileinheit, wenn - in dem vorstehend dargelegten Sinne - eine fluidische Betätigung der beiden Einzelventile über zugeordnete Druck-Weg-Wandler aus einem gemeinsamen Steuerraum erfolgt. Insoweit kommt zum Tragen, dass durch Verwendung des durch die Ventilgruppe geschalteten Arbeitsfluids auch in der Vorstufe, d.h. zur Betätigung der beiden Einzelventile synergetische Effekte erzielbar sind, die sich insbesondere in einem gleichermaßen kompakten wie leistungsfähigen System niederschlagen. Bei dieser Weiterbildung erfolgt, mit anderen Worten, die Beeinflussung der beiden Druck-Wege-Wandler zur Veränderung der Stellung der Ventilspindeln der beiden Sitzventile gezielt über ein elektrisches Signal, über das die Pilotstufe variabel angesteuert wird. Das Ansteuersignal der Pilotstufe wird idealerweise über einen Regelkreis unter Berücksichtigung des Sensorsignals generiert.

Bei der vorstehenden Weiterbildung der vorliegenden Erfindung kann die elektro-fluidische Vorstufe mit genau einem elektromechanischen Wandler und genau einem von diesem betätigten Proportionalventil auskommen. In Verbindung mit der für erfindungsgemäße Ventileinheiten charakteristischen eindeutigen Zuordnung des durch den Schaltzustand der beiden Sitzventile definierten Betriebspunkt der Ventilgruppe zu dem Druck in dem einen (einzigen) Steuerraum lässt sich beispielsweise ein unter Verwendung der erfindungsgemäßen Ventileinheit aufgebauter Stellungsregler trotz eines geringen baulichen und apparativen Aufwands regelungstechnisch leicht beherrschen, wobei insbesondere Instabilitäten vermieden werden können.

Gemäß einer wiederum anderen besonders bevorzugten Weiterbildung weisen die jeweils ein Sitzventil und den zugeordneten Aktor umfassenden Einheiten einen nicht-linearen Verlauf der Kennlinie des Öffnungsquerschnitts über der Eingangsgröße des Aktors auf. Vielmehr ist die Kennlinie bevorzugt benachbart zu dem jeweils vollständig geschlossenen Bereich des betreffenden Sitzventils in dem Sinne flach, als eine bestimmte Veränderung des Öffnungsquerschnitts eine größere Veränderung der Eingangsgröße erfordert als in einem vom vollständig geschlossenen Ventil weiter entfernten Bereich. Mit anderen Worten, der das Verhältnis des Öffnungsquerschnitts zur Eingangsgröße des Aktors bestimmende Gradient ist bei beiden Sitzventilen besonders bevorzugt nahe dem jeweiligen Schließpunkt flacher als weiter entfernt vom jeweiligen Schließpunkt. Dies ermöglicht beispielsweise eine besonders feinfühlige Beaufschlagung eines über die erfindungsgemäße Ventileinheit betätigten Antriebselements eines Stellantriebs, wobei insbesondere der beidseitig an den Haltebereich angrenzende Feinregelbereich durch Überwachen des Stellungsreglerzustandes selbst bei geringen geforderten Massenströmen besonders exakt genutzt werden kann. Auch dies ist wiederum ein Gesichtspunkt, der von großem Vorteil ist im Hinblick auf die Stabilität der Regelung. Eine entsprechende Abstimmung der Komponenten im Hinblick auf die besagte Nicht-Linearität kann dabei nicht nur am jeweiligen Aktor (z.B. dem Druck-Weg-Wandler) ansetzen. Vielmehr ist auch eine solche Abstimmung am Sitzventil selbst möglich, namentlich indem diese weich dichtend ausgeführt sind. Zur Erzeugung des besagten flachen Gradienten der Kennlinie können die Dichtkanten dergestalt auf die Härte des jeweiligen Ventilsitzes abgestimmt sein, dass - durch entsprechende Formgebung - ein Öffnungsspalt zunächst nicht über den gesamten Umfang der Dichtkante gebildet wird, sondern vielmehr nur über einen Teilbereich der Dichtkante. Besonders vorteilhaft ist im Hinblick auf die vorstehend erläuterten weichdichtenden Eigenschaften des Sitzventils, wenn der Ventilsitz an einer gefassten Dichtung ausgeführt ist, wobei die Dichtkante besonders bevorzugt auf dem bewegbaren Ventilkörper (Schließkörper) ausgeführt ist.

Der für die erfindungsgemäße Dreiwegeventileinheit charakteristische Sensor kann gemäß einer wiederum anderen bevorzugten Weiterbildung einen funktionalen Bestandteil der Vorspanneinrichtung bilden, indem er als integrales Feder-Sensor-Element ausgeführt ist. Hierunter ist zu verstehen, dass das besagte Element sowohl eine auf mindestens eine der Ventilspindeln, bevorzugt auf beide Ventilspindeln wirkende Vorspannkraft bereitstellt und zugleich ein - auf die Regeleinheit zurückzuführendes - Signal generiert, welches zu dem Relativabstand der beiden Ventilspindeln zueinander korrespondiert. Auf diese Weise ist eine weitere konstruktive und bauliche Vereinfachung der erfindungsgemäßen Dreiwegeventileinheit mit der Möglichkeit von deren besonders kompakter Ausführung möglich.

Mit besonderem Nutzen lässt sich die erfindungsgemäße Ventileinheit im Rahmen von Stellungsreglern (beispielsweise für Armaturen-Stellantriebe) einsetzen, wobei hier das Antriebselement des Stellantriebs bevorzugt genau einen fluidischen Arbeitsraum aufweist, der über einen Arbeitsausgang der Ventileinheit mit jeweils einer ersten Ventilkammern beider Sitzventile in Verbindung steht, wobei die zweite Ventilkammer des ersten Sitzventils mit einer Druckfluidversorgung und die zweite Ventilkammer des zweiten Sitzventils mit einem Druckfluidablass in Verbindung steht. Eine solche Bauweise nutzt konsequent die durch die Erfindung bereitgestellten Möglichkeiten und stellt einen leistungsfähigen, kompakten, zuverlässigen Stellantrieb zur Verfügung.

Im Folgenden wird die vorliegende Erfindung anhand der in der Zeichnung veranschaulichten bevorzugten Ausführungsbeispiele näher erläutert. Dabei zeigt
- Fig. 1: in schematischer Darstellung einen Stellantrieb, der unter Verwendung eines ersten Ausführungsbeispiels einer erfindungsgemäßen Ventileinheit aufgebaut ist,
- Fig. 2: einen Kennlinienverlauf der Leistungsstufe der Ventileinheit nach Fig. 1, d.h. der Öffnungsquerschnitte der beiden Sitzventile über dem Steuerdruck,
- Fig. 3: ein zweites Ausführungsbeispiel der Erfindung als eine Abwandlung des Ausführungsbeispiels nach Fig. 1,
- Fig. 4: ein drittes Ausführungsbeispiel der Erfindung als eine Abwandlung des Ausführungsbeispiels nach Fig. 1,
- Fig. 5: und
- Fig. 6: .

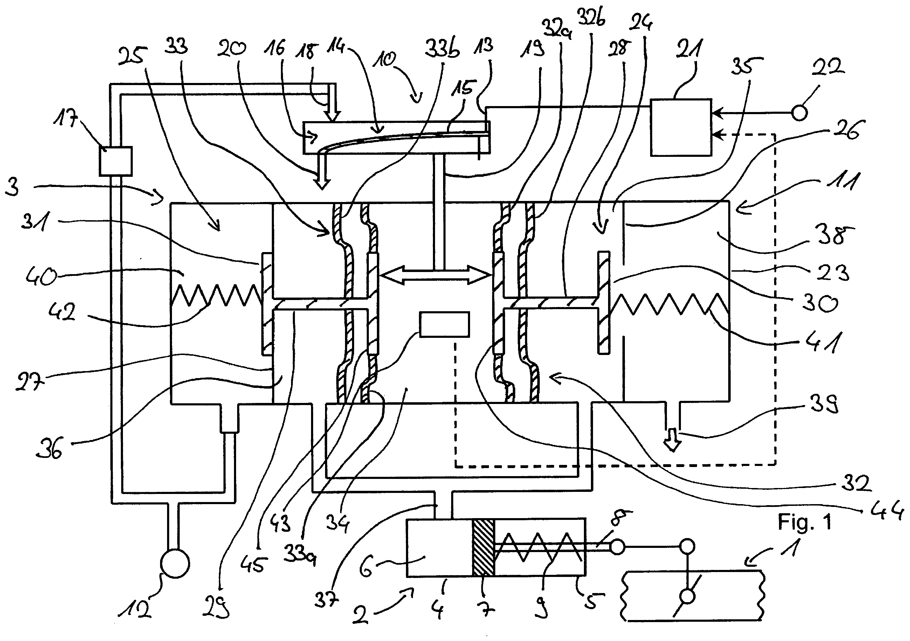

Der in Fig. 1 veranschaulichte pneumatische, der Betätigung einer Armatur 1 dienende Stellantrieb umfasst ein mit Druckluft beaufschlagbares Antriebselement 2 und einen die Druckluft-Beaufschlagung des Antriebselements regelnden proportionalen Stellungsregler 3. Das Antriebselement 2 ist dabei in Form eines einfachwirkenden Pneumatikzylinders 4 ausgeführt, der in als solches bekannter Weise ein Gehäuse 5, einen darin dichtend verschiebbar geführten, einen volumenveränderlichen Arbeitsraum 6 begrenzenden Kolben 7 samt Kolbenstange 8 und eine auf den Kolben 7 wirkende Vorspann- bzw. Rückstellfeder 9 umfasst.

Der proportionale Stellungsregler 3 ist zweistufig ausgeführt mit einer elektro-pneumatischen Vorstufe (Pilotstufe) 10 und einer pneumatischen Leistungsstufe 11. Der Versorgung sowohl der Vorstufe 10 als auch der Leistungsstufe 11 dient dabei ein und dieselbe Druckluftversorgung 12.

Die elektro-pneumatische Vorstufe 10 umfasst einen elektrischen Signaleingang 13, genau einen elektromechanischen Wandler 14 in Form eines piezoelektrischen Biegewandlers 15 und genau ein von diesem betätigtes Proportionalventil 16 mit einem - über das Duckreduzierventil 17 - an die Druckluftversorgung 12 angeschlossenen Drucklufteingang 18, einem Steuerdruckausgang 19 und einem Ablassausgang 20. In als solches bekannter Weise hängt der an dem Steuerdruckausgang 19 bestehende Druck von der spezifischen Geometrie des piezoelektrischen Biegewandlers 15 ab, die ihrerseits von der am elektrischen Signaleingang 13 anliegenden Spannung abhängt. Der elektrische Signaleingang 13 steht seinerseits über eine Regeleinheit 21 mit der Sollwerteingabe 22 in Verbindung.

Die pneumatische Leistungsstufe 11 umfasst zwei in Form einer Ventilgruppe in einem Gehäuse 23 untergebrachte, einander diametral gegenüberliegend angeordnete Sitzventile 24 und 25, welche jeweils einen gehäusefest angeordneten Ventilsitz 26 bzw. 27 und eine Ventilspindel 28 bzw. 29 mit daran angeordnetem Schließkörper 30 bzw. 31 umfassen. Die Ventilspindel 28 bzw. 29 ist dabei jeweils mit einer doppelwandigen Membraneinheit 32 bzw. 33 dicht und fest verbunden, wobei der innerhalb des Gehäuses 23 zwischen den beiden Membraneneinheiten 32 und 33 angeordnete Raum einen Steuerraum 34 bildet, an welchen der Steuerdruckausgang 19 der piezoelektrischen Vorstufe 10 angeschlossen ist. Im Detail ist die Ventilspindel 28 des Sitzventils 24 mit einer Druckplatte 44 fest verbunden, die funktionaler Teil der "Steuerdruckmembran" 32a ist, welche ihrerseits die dem Steuerraum 34 zugewandte Wand der (doppelwandigen) Membraneinheit 32 bildet. Die zweite Wand der Membraneinheit 32 bildet eine "Kammermembran" 32b, wobei der Raum zwischen der Steuerdruckmembran 32a und der Kammermembran 32b drucklos und belüftet ist. Entsprechendes gilt für das zweite Sitzventil 25. Die Membraneinheiten 32 und 33 dichten den Steuerraum 34 gegenüber jeweils einer ersten Ventilkammer 35 bzw. 36 des jeweiligen Sitzventils 24 bzw. 25 ab, wobei die beiden ersten Ventilkammern 35 und 36 miteinander und mit einem gemeinsamen Arbeitsausgang 37 der Leitungsstufe 11 kommunizieren, welcher seinerseits mit dem pneumatischen Arbeitsraum 6 des Antriebselements 2 in Verbindung steht. Die zweite Ventilkammer 38 des ersten Sitzventils 24 steht dabei mit einem Druckluftablass 39 in Verbindung, während die zweite Ventilkammer 40 des zweiten Sitzventils 25 mit der Druckluftversorgung 12 verbunden ist. Die Vorstufe 10 kann, ohne dass dies in der Zeichnung explizit gezeigt wäre, baulich in das Gehäuse 23 der Leistungsstufe 11 integriert oder unmittelbar an diese angebaut sein.

Auf beide Ventilspindeln 28 bzw. 29 wirkt jeweils eine Vorspann- bzw. Rückstellfeder 41 bzw. 42, und zwar dergestalt, dass von den beiden Sitzventilen 24 und 25 der Leistungsstufe 11 - bei Abwesenheit einer pneumatischen Beaufschlagung, d.h. bei drucklosem Steuerraum 34 (s.u.) - ein erstes, nämlich das in Fig. 1 rechts gezeigte erste Sitzventil 24, in eine geöffnete Stellung vorgespannt ist, wohingegen das zweite, nämlich das in Fig. 1 links gezeigte zweite Sitzventil 25, in eine geschlossene Stellung vorgespannt ist. Zu jedem der beiden Sitzventile 24 und 25 bildet die funktionale Kombination von Membraneinheit 32 bzw. 33 und Vorspann- bzw. Rückstellfeder 41 bzw. 42 einen - auf den betreffenden Schließkörper 30 bzw. 31 respektive die betreffende Ventilspindel 28 bzw. 29 wirkenden - Druck-Weg-Wandler in dem Sinne, dass sich die Stellung der jeweiligen Ventilspindel 28 bzw. 29 nach dem in dem Steuerraum 34 herrschenden Druck (Steuerdruck) richtet. Die weiter oben bereits erwähnte Anordnung der beiden Sitzventile 24 und 25 einander diametral gegenüberliegend erstreckt sich dabei auch auf die beiden Druck-Weg-Wandler, mittels derer, mit anderen Worten, die Sitzventile 24 und 25 pneumatisch betätigbar sind. Wesentlich ist insoweit, dass die beiden Druck-Weg-Wandler aus einem gemeinsamen Steuerraum 34 beaufschlagt werden, der mit dem Steuerdruckausgang 19 der Vorstufe 10 verbunden ist.

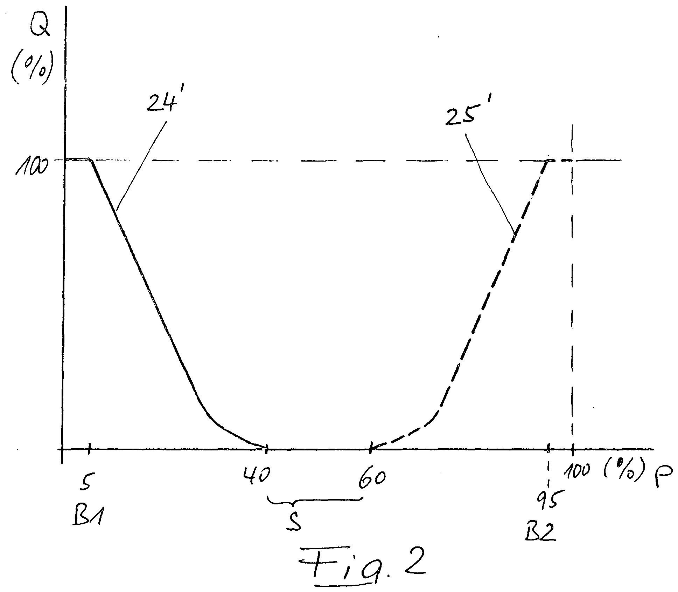

Der dem ersten Sitzventil 24 zugeordnete Druck-Weg-Wandler ist dergestalt auf den dem zweiten Sitzventil 25 zugeordneten Druck-Weg-Wandler abgestimmt (vgl. Fig. 2), dass bei einem stetigen Druckanstieg in dem Steuerraum 34, d.h. bei stetig steigendem Steuerdruck p über einen - durch einen unteren Betriebsdruck B1 und einen oberen Betriebsdruck B2 - begrenzten Arbeitsdruckbereich zunächst das erste Sitzventil 24 fortschreitend geschlossen und erst nach dem vollständigen Schließen des ersten Sitzventils 24 das zweite Sitzventil 25 fortschreitend geöffnet wird. Innerhalb eines einen Sperrbereich S bildenden Teilbereiches des Arbeitsdruckbereichs für den Steuerdruck sind beide Sitzventile 24 und 25 geschlossen, wobei der Sperrbereich etwa 20% des vom Steuerdruck insgesamt erreichbaren Steuerdruckbereichs einnimmt. Der Mittelwert des Steuerdruckbereichs liegt dabei innerhalb des Sperrbereichs S.

Der Arbeitsdruckbereich macht etwa 90% des vom Steuerdruck insgesamt erreichbaren Steuerdruckbereichs aus, was bedeutet, dass in den untersten 5% und den obersten 5% des Steuerdruckbereichs sich die jeweilige Stellung der beiden Sitzventile 24 und 25 nicht ändert. Wie dies in Fig. 2 veranschaulicht ist, weisen die jeweils ein Sitzventil 24 bzw. 25 und den zugeordneten Druck-Weg-Wandler umfassenden Einheiten einen nicht-linearen Verlauf der Kennlinie 24' bzw. 25' des Öffnungsquerschnitts Q über dem Steuerdruck p auf. Im Einzelnen liegt jeweils nahe bzw. benachbart dem Sperrbereich S in dem Sinne eine flache Kennlinie vor, dass für eine Veränderung des Öffnungsquerschnitts Q des Sitzventils 24 bzw. 25 um ein vorgegebenes Maß eine vergleichsweise große Änderung des Steuerdrucks p erforderlich ist, verglichen mit den weiter vom Sperrbereich S entfernten Bereichen des Kennfeldes. Solche Nicht-Linearitäten lassen sich insbesondere über eine geeignete Abstimmung von Ventilsitz 26 bzw. 27 und Schließkörper 30 bzw. 31 aufeinander bereitstellen, aber auch durch Maßnahmen auf Seiten der Druck-Weg-Wandler (z.B. der Membraneinheiten 32 bzw. 33 und/oder der Vorspann- und Rückstellfedern 41 bzw. 42).

Aus dem vorstehend erläuterten Aufbau ergibt sich die folgende Funktionsweise des Stellantriebs: Wird durch entsprechende Beaufschlagung der elektro-pneumatischen Vorstufe 10 durch den Sollwerteingang 22 und über die Regeleinheit 21 der in dem Steuerraum 34 herrschende Steuerdruck - ausgehend von zunächst drucklosem Zustand - allmählich erhöht, so beginnt nach etwa 5% Druckanstieg (bezogen auf den vom Steuerdruck insgesamt erreichbaren Steuerdruckbereich) das erste Sitzventil 24 zu schließen, wobei sich infolge der weiter oben erläuterten Kennlinie der Öffnungsquerschnitt des ersten Sitzventils 24 zunächst vergleichsweise rasch, später jedoch deutlich langsamer ändert. Etwa bei 40% des maximalen Steuerdrucks ist das erste Sitzventil vollständig geschlossen. Bei einer weiteren Steigerung des Steuerdrucks bis zum Erreichen von etwa 60% des maximalen Steuerdrucks verändert sich die Stellung der Sitzventile 24 und 25 nicht; hier sind beide Sitzventile gesperrt. Erst bei einer weiteren Zunahme des Steuerdrucks öffnet sich das zweite Sitzventil 25, und zwar zunächst allmählich, später dann rascher, und zwar bis es bei etwa 95% des maximalen Steuerdrucks seine vollständig geöffnete Stellung erreicht hat.

Infolge dieser Charakteristik des Stellungsreglers 3 und der weiter oben beschriebenen Anbindung von Druckluftversorgung 12 und Antriebselement 2 an diesen ist der Arbeitsraum 6 des Antriebselements 2 bei einem Steuerdruck innerhalb des Sperrbereichs S (40% bis 60% des Steuerdrucks) gesperrt, innerhalb des zwischen 0% und 40% liegenden Druckbereiches (bei unterschiedlichen Öffnungsquerschnitten des ersten Sitzventils 24) mit dem Druckluftablass 39 und innerhalb des zwischen 60% und 100% liegenden Druckbereiches (bei unterschiedlichen Öffnungsquerschnitten des zweiten Sitzventils 25) mit der Druckluftversorgung 12 verbunden. Demgemäß wird die Armatur 1 in Abhängigkeit von dem im Sterraum 34 herrschenden Steuerdruck (ohne Eigenluftverbrauch der Leistungsstufe 11) gehalten, mehr oder weniger dynamisch geschlossen oder aber - wiederum mehr oder weniger dynamisch - geöffnet.

Der Stellungsregler umfasst einen in dem Steuerraum 34 zwischen den beiden Sitzventilen 24 und 25 angeordneten Sensor 43, der den Relativabstand misst, den die beiden mit den Ventilspindeln 28 bzw. 29 der Sitzventile 24 bzw. 25 fest verbundenen Druckplatten 44 und 45 zueinander einhalten. Ein dem betreffenden Abstand entsprechendes - und somit für den aktuellen Betriebspunkt der Leistungsstufe 11 charakteristisches - Signal wird von dem Sensor 43 als rückgeführter Istwert der Regeleinheit 21 zugeführt. Statt den Abstand zwischen den Druckplatten 44 und 45 könnte der Sensor 43 alternativ auch den Abstand zwischen sonstigen steuerdruckreaktiven Elementen der beiden Druck-Weg-Wandler, zwischen denen er - ggf. auf einer Steuerplatine - angeordnet ist, ermitteln. Insoweit ist zu beachten, dass die den beiden Sitzventilen 24 und 25 zugeordneten Druck-Weg-Wandler und/oder Ventilspindeln 28 und 29 nicht starr miteinander gekoppelt sind.

Die Vorstufe 10 ist dergestalt ausgeführt, dass ohne ein auf sie geschaltetes elektrisches Eingangssignal der Steuerraum 34 drucklos ist, so dass das erste Sitzventil 24 offen und das zweite Sitzventil 25 geschlossen ist. Als Folge hiervon ist der Arbeitsraum 6 der Antriebseinheit 2 drucklos und der Kolben 7 der Antriebseinheit 2 nimmt die durch die Vorspann- und Rückstellfeder 9 vorgegebene Stellung ein. Damit ist die Stellung der Sitzventile 24 und 25 der Leistungsstufe 11 - wie auch die Stellung des Antriebselements 2 - bei Ausfall der Regeleinheit 21 (oder einem vergleichbaren Defekt) auf der Seite der Vorstufe 10 identisch wie im Falle eines Ausfalls der Druckluftversorgung 12. Der Stellantrieb hat damit ein definiertes und eindeutiges Fail-Safe-Verhalten.

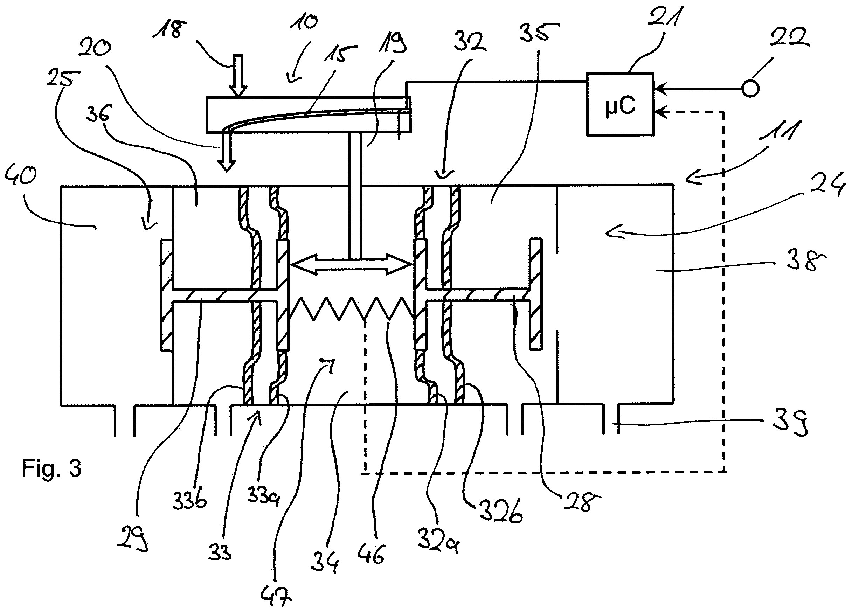

Die in Fig. 3 (nur in einem entsprechenden Ausschnitt) veranschaulichte Abwandlung des Stellantriebs nach Fig. 1 unterscheidet sich von der vorstehend erläuterten Ausführungsform primär durch eine andersartige Ausgestaltung der Druck-Weg-Wandler und des Sensors. Und zwar werden hier die auf die beiden Ventilspindeln 28 und 29 wirkenden Rückstellkräfte von einem gemeinsamen, in dem Steuerraum 34 angeordneten, auf Zug beanspruchten Federelement 46 bereitgestellt. Die erfindungsgemäß hierarchische, d.h. steuerdruckabhängig zueinander versetzt erfolgende Betätigung der beiden Sitzventile 24 und 25 wird demgemäß durch unterschiedliche Auslegung der beiden Membraneinheiten 32 und 33 hinsichtlich ihrer vom Steuerdruck beaufschlagten Fläche und/oder ihrer Steifigkeit erreicht. Das gemeinsame Federelement 46 stellt dabei überdies zugleich einen Sensor 47 dar, indem in es dergestalt eine Sensorfunktion integriert ist, dass die tatsächliche Dehnung des Federelements 46 erfasst und als für den Betriebspunkt der Leitungsstufe, d.h. die Stellung der beiden Sitzventile 24 und 25 charakteristische Größe auf die Regeleinheit 21 zurückgeführt wird.

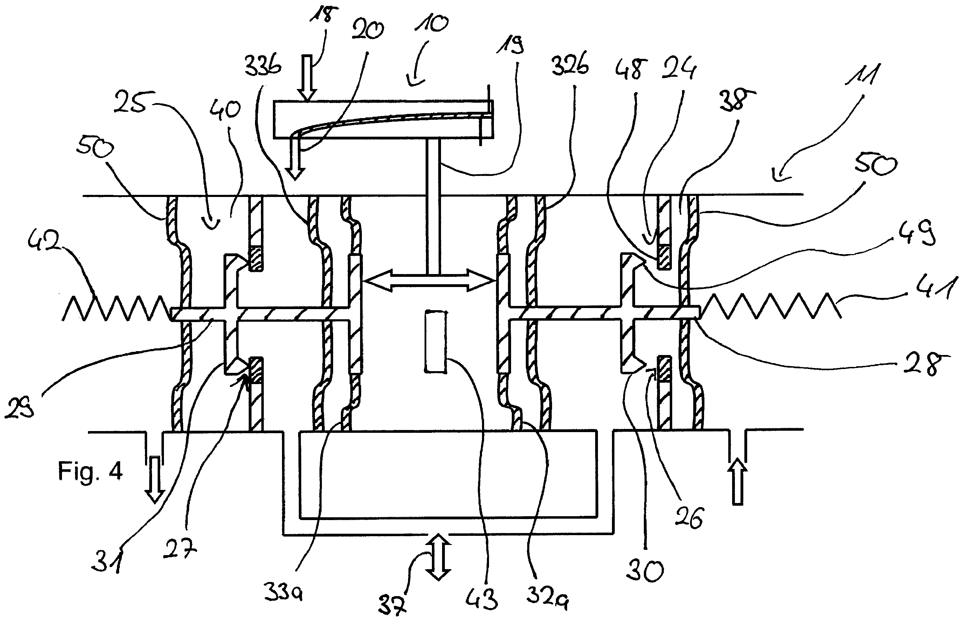

Fig. 4 verdeutlicht spezifische konstruktive Optionen zur Ausgestaltung der Sitzventile 24 und 25. So ist hier insbesondere die Verwendung von weichdichtenden Sitzventilen veranschaulicht, wobei jeweils der Ventilsitz 26 bzw. 27 an einer gefassten Dichtung 48 mit einer Härte zwischen Shore 70 und Shore 85 ausgeführt ist. Und an dem Schließkörper 30 bzw. 31 der jeweiligen Ventilspindel 28 bzw. 29 ist eine definierte Dichtkante 49 ausgeführt. Hierdurch lässt sich die bereits in Fig. 2 angedeutete Nicht-Linearität der Ventilkennlinien 24' und 25' (Öffnungsquerschnitt Q vs. Steuerdruck p) noch ausgeprägter vorgeben, um eine möglichst feinfühlige Verstellung des Antriebselements 2 zu ermöglichen.

Weiterhin ist in Fig. 4 ersichtlich, dass mit der Spindel 28 bzw. 29 jedes Sitzventils 24 bzw. 25 eine zweite Membraneinheit (Kammermembran) 50 verbunden ist, welche die jeweilige zweite Ventilkammer 38 bzw. 40 des jeweiligen Sitzventils gegenüber der Umgebung abdichtet.

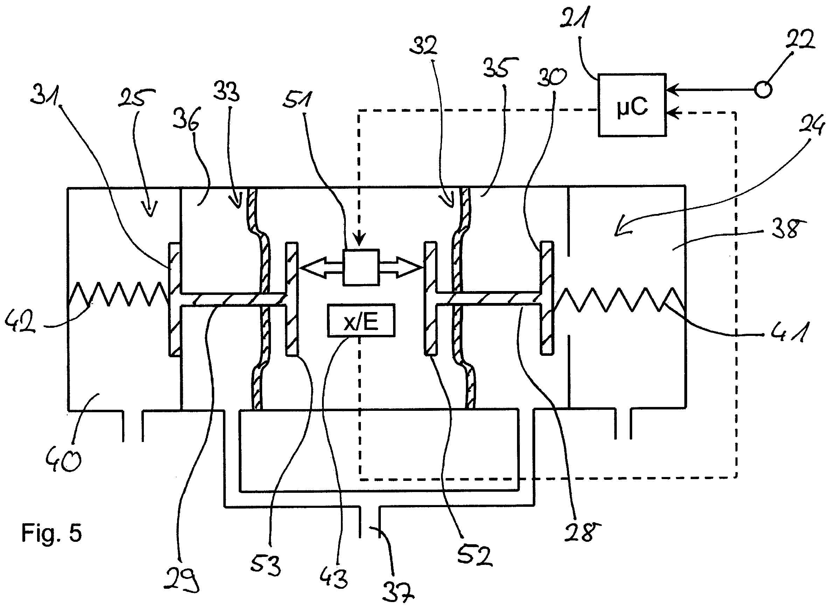

Fig. 5 veranschaulicht eine erfindungsgemäße Ventileinheit in einstufiger Ausführung. Ihr Aufbau und ihre Funktion erschließt sich ohne weiteres aus der vorstehenden Erläuterung des Stellungsreglers nach Figuren 1 und dessen Funktionsweise, allerdings mit der Maßgabe, dass hier der von der Regeleinheit 21 beaufschlagte, auf die beiden Ventilspindeln 28 und 29 wirkende Aktuator auf einem beliebigen geeigneten, z.B. elektromagnetischen Funktionsprinzip beruht. Er kann demgemäß als eine Spule 51 ausgeführt sein, welche auf die mit den Ventilspindeln 28 und 29 endseitig fest verbundenen Platten 52 und 53 entsprechend ihrer tatsächlichen Beaufschlagung zunehmend abstoßende Kräfte ausübt, wobei die hierarchische, sequentielle Bewegung zunächst des ersten Sitzventils 24 und erst anschließend des zweiten Sitzventils 25 durch entsprechende Abstimmung der Vorspann- und Rückstellfedern 41 und 42 und/oder der Membraneinheiten 32 und 33, welch in diesem Falle einwandig ausgeführt sein können, vorgegeben ist. In kinematischer Umkehrung könnte bei einer entsprechenden Umstellung der Sitzventile ersichtlich auch eine Spule-Anker-Konfiguration zum Einsatz kommen, bei der die Ventilspindeln 28 und 29 von der Spule 51 entsprechend deren Beaufschlagung zunehmend angezogen werden.

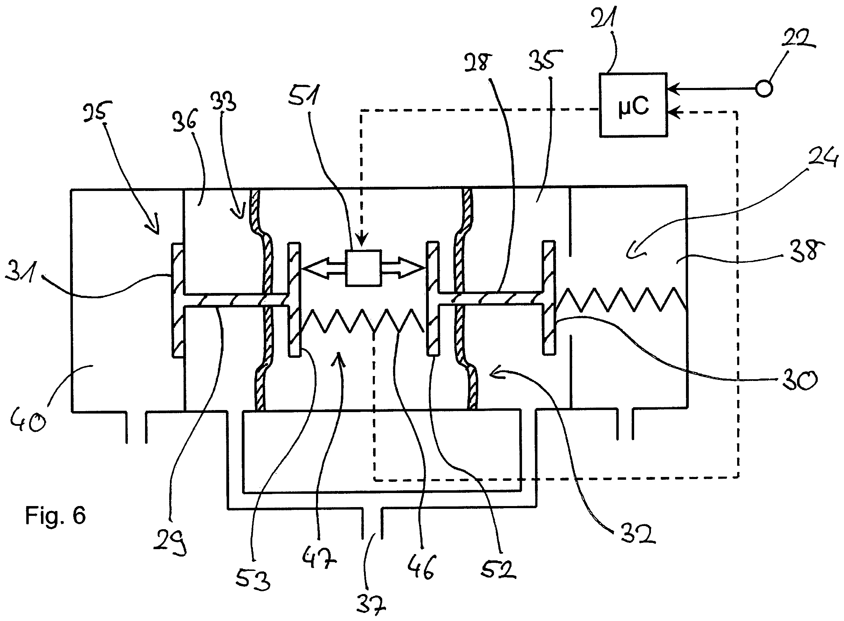

Für die in Fig. 6 schematisch gezeigte Ausführungsform gelten die vorstehenden Erläuterungen zu Fig. 5 in entsprechender Weise, wobei hier allerdings in Analogie zu der Ausführungsform nach Fig. 3 eine kombinierte Feder-Sensor-Einheit 47 zum Einsatz kommt.

## Patentansprüche

1. Geregelte Proportional-Dreiwegeventileinheit mit einer zwei Einzelventile umfassenden Ventilgruppe, einer die Einzelventile der Ventilgruppe betätigenden Betätigungseinrichtung und einer auf die Betätigungseinrichtung wirkenden, einen Steuersignaleingang aufweisenden Regeleinheit (21), mit den folgenden Merkmalen;
die Einzelventile der Ventilgruppe sind als zwei einander gegenüberliegend angeordnete Sitzventile (24, 25) mit gegenläufig bewegbaren Ventilspindeln (28, 29) ausgeführt;
die beiden Ventilspindeln (28, 29) sind mittels einer Vorspanneinrichtung zueinander gegensinnig vorgespannt, und zwar dergestalt, dass bei inaktiver Betätigungseinheit ein erstes der Sitzventile (24) geöffnet und das zweite Sitzventil (25) geschlossen ist;
eine Ventilkammer (35) des ersten Sitzventils (24) und eine Ventilkammer (36) des zweiten Sitzventils (25) sind gemeinsam mit einem ersten (37) der drei Anschlüsse der Ventileinheit verbunden;
die Betätigungseinrichtung weist einen für beide Sitzventile (24, 25) gemeinsamen, auf die beiden Ventilspindeln (28, 29) einwirkenden Aktuator auf, der in Abhängigkeit von seiner Beaufschlagung die Lage der Ventilspindeln entgegen der Wirkung der Vorspanneinheit verändert;
**gekennzeichnet durch** die folgenden Merkmale:
die Betätigungseinrichtung und die Vorspanneinrichtung sind dergestalt aufeinander abgestimmt, dass bei einer stetigen Veränderung der der Betätigungseinrichtung zugeführten Eingangsgröße von einem ersten Betriebswert zu einem zweiten Betriebswert zueinander versetzt zunächst das erste Sitzventil (24) fortschreitend über seinen gesamten Betriebshub geschlossen und erst anschließend das zweite Sitzventil (25) fortschreitend über seinen gesamten Betriebshub geöffnet wird;
ein Sensor (43, 47) stellt ein dem Relativabstand der beiden Ventilspindeln (28, 29) zueinander entsprechendes Signal bereit, welches auf die Regeleinheit (21) zurückgeführt ist.

2. Ventileinheit nach Anspruch 1, **dadurch gekennzeichnet, dass** eine fluidische, insbesondere eine pneumatische Betätigungseinrichtung vorgesehen ist, welche zwei aus einem gemeinsamen Steuerraum (34) beaufschlagte Druck-Weg-Wandler aufweist, von denen ein erster auf die Ventilspindel (28) des ersten Sitzventils (24) und ein zweiter auf die Ventilspindel (29) des zweiten Sitzventils (25) wirkt.

3. Ventileinheit nach Anspruch 2, **dadurch gekennzeichnet, dass** die Ventileinheit zweistufig ausgeführt ist und eine zwischen die Regeleinheit (21) und die Ventilgruppe geschaltete elektro-fluidische Vorstufe (10) umfasst, welche ihrerseits einen mit der Regeleinheit (21) verbundenen elektrischen Signaleingang (13), einen Druckfluideingang (18), einen mit dem Steuerdruckraum (34) verbundenen Steuerdruckausgang (19) und ein zwischen dem Druckfluideingang (18) und dem Steuerdruckausgang (19) angeordnetes proportionales Pilotventil (16) umfasst.

4. Ventileinheit nach Anspruch 1, **dadurch gekennzeichnet, dass** sie einstufig und mit einer elektrischen Betätigungseinrichtung, auf welche die Regeleinheit unmittelbar wirkt, ausgeführt ist.

5. Ventileinheit nach einem der Ansprüche 1 bis 4, **dadurch gekennzeichnet, dass** der Sensor (43) auf einer Steuerplatine angeordnet ist, welche ihrerseits zwischen den beiden Sitzventilen (24, 25) angeordnet ist.

6. Ventileinheit nach einem der Ansprüche 1 bis 5, **dadurch gekennzeichnet, dass** zwischen der dem Steuersignaleingang der Regeleinheit (21) zugeführten Eingangsgröße und dem Öffnungsquerschnitt der beiden Sitzventile (24, 25) ein nicht-linearer Zusammenhang besteht.

7. Ventileinheit nach einem der Ansprüche 1 bis 6, **dadurch gekennzeichnet, dass** die Vorspanneinrichtung auf die beiden Ventilspindeln (28, 29) mit unterschiedlichen Vorspannkräften wirkt.

8. Ventileinheit nach einem der Ansprüche 1 bis 7, **dadurch gekennzeichnet, dass** der Sensor (47) funktionaler Bestandteil der Vorspanneinrichtung ist, indem er als integrales Feder-Sensor-Element ausgeführt ist.

9. Stellantrieb, umfassend ein mit einem Druckfluid beaufschlagbares Antriebselement (2) und eine dessen Beaufschlagung regelnde Ventileinheit nach Anspruch 1, wobei ein Arbeitsraum (6) des Antriebselements (2) mit dem ersten Anschluss (37) der Ventileinheit verbunden ist.

## Claims

1. A regulated proportional three-way valve unit with a valve group comprising two single valves, an actuating device that actuates the single valves of the valve group, and a regulating unit (21) acting on the actuating device and having a control-signal input, with the following features;
the single valves of the valve group are constructed as two poppet valves (24, 25) disposed opposite one another with valve spindles (28, 29) that can move in opposite directions;
the two valve spindles (28, 29) are biased in mutually opposite directions by means of a biasing device, specifically in such a way that a first (24) of the poppet valves is opened and the second poppet valve (25) is closed while the actuating device is inactive;
a valve chamber (35) of the first poppet valve (24) and a valve chamber (36) of the second poppet valve (25) are in communication together with a first (37) of the three ports of the valve unit;
the actuating device has an actuator, which is common to both poppet valves (24, 25) and acts on both valve spindles (28, 29), and which, depending on its pressurization, changes the position of the valve spindles against the action of the biasing device;
**characterized in that**
the actuating device and the biasing device are matched to one another in such a way that, during steady changes of the input variable fed to the actuating device from a first operating value to a second operating value in a manner offset relative to one another, the first poppet valve (24) is closed progressively over its entire operating travel at first and only then is the second poppet valve (25) opened progressively over its entire operating travel;
a sensor (43, 47) supplies a signal, which corresponds to the relative distance of the two valve spindles (28, 29) from one another and is fed back to the regulating unit (21).

2. The valve unit of claim 1, wherein a fluidic, especially pneumatic, actuating device is provided, which has two pressure-displacement transducers pressurized from a common control chamber (34), a first of which acts on the valve spindle (28) of the first poppet valve (24) and a second acts on the valve spindle (29) of the second poppet valve (25).

3. The valve unit of claim 2, wherein the valve unit is constructed in two stages and comprises an electro-fluidic pilot stage (10), which is connected between the regulating unit (21) and the valve group and which in turn comprises an electrical signal input (13) connected with the regulating unit (21), a pressurized-fluid inlet (18), a control-pressure outlet (19) in communication with the control-pressure chamber (34) and a proportional pilot valve (16) disposed between the pressurized-fluid inlet (18) and the control-pressure outlet (19).

4. The valve unit of claim 1, wherein it is constructed as a single stage and has an electrical actuating device, on which the regulating unit acts directly.

5. The valve unit of one of claims 1 to 4, wherein the sensor (43) is disposed on a control platen, which in turn is disposed between the two valve spindles (24, 25).

6. The valve unit of one of claims 1 to 5, wherein a nonlinear relationship exists between the input variable fed to the control-signal input of the regulating unit (21) and the opening cross section of the two poppet valves (24, 25).

7. The valve unit of one of claims 1 to 6, wherein the biasing device acts on the two valve spindles (28, 29) with different biasing forces.

8. The valve unit of one of claims 1 to 7, wherein the sensor (47) is a functional component of the biasing device, by the fact that it is constructed as an integral spring-sensor element.

9. A positioning drive comprising a drive element (2) to which a pressurized fluid can be admitted and a valve unit according to claim 1 for regulating the pressurization thereof, wherein a working chamber (6) of the drive element (2) is in communication with the first port (37) of the valve unit.

## Revendications

1. Unité régulée de soupape proportionnelle à trois voies, avec un groupe de soupapes comprenant deux soupapes individuelles, un système d'actionnement, actionnant les soupapes individuelles du groupe de soupapes et une unité de régulation (21) agissant sur l'unité d'actionnement, comportant une entrée de commande, présentant les caractéristiques suivantes ; les soupapes individuelles du groupe de soupapes sont réalisées sous la forme de deux soupapes à siège (24, 25) placées en vis-à-vis, avec des tiges de soupape (28, 29) mobiles en sens opposé ;
les deux tiges de soupape (28, 29) sont précontraintes à contresens mutuel au moyen d'un système de précontrainte, à savoir de telle sorte que lorsque l'unité d'actionnement est inactive, une première des soupapes à siège (24) soit ouverte et la deuxième soupape à siège (25) soit fermée ;
une chambre de soupape (35) de la première soupape à siège (24) et une chambre de soupape (36) de la deuxième soupape à siège (25) sont reliées en commun avec un premier (37) des trois raccords de l'unité de soupapes ;
le système d'actionnement comporte un actionneur commun aux deux soupapes à siège (24, 25), agissant sur les deux tiges de soupape (28, 29) qui en fonction de sa sollicitation, modifie la position des tiges de soupape à l'encontre de l'action de l'unité de précontrainte ;
**caractérisée par** les attributs suivants : le système d'actionnement et le système de précontrainte sont synchronisés l'un sur l'autre, de telle sorte que lors d'une modification continue des données d'entrées amenées au système d'actionnement, d'une première valeur de service à une deuxième valeur de service, d'abord la première soupape à siège (24) est fermée progressivement sur toute sa course de travail et seulement par la suite, la deuxième soupape à siège (25) est ouverte progressivement sur toute sa course de travail ;
un capteur (43, 47) met à disposition un signal correspondant à l'écart relatif mutuel des deux tiges de soupape (28, 29), lequel est ramené à l'unité de régulation (21).

2. Unité de soupapes selon la revendication 1, **caractérisée en ce qu'**il est prévu un système d'actionnement fluidique, notamment pneumatique, lequel comporte deux convertisseurs pression/déplacement, sollicités à partir d'un espace de commande (34) commun, dont un premier agit sur la tige de soupape (28) de la première soupape à siège (24) et un deuxième agit sur la tige de soupape (29) de la deuxième soupape à siège (25) .

3. Unité de soupapes selon la revendication 2, **caractérisée en ce que** l'unité de soupapes est conçue avec deux étages et comporte un étage préliminaire (10) monté entre l'unité de régulation (21) et le groupe de soupapes, laquelle comprend pour sa part une entrée de signal (13) électrique reliée avec l'unité de régulation (21), une entrée de fluide sous pression (18), une sortie de pression de commande (19) reliée avec l'espace de pression de commande (34) et une soupape pilote (16) proportionnelle, placée entre l'entrée de fluide sous pression (18) et la sortie de pression de commande (19).

4. Unité de soupapes selon la revendication 1, **caractérisée en ce qu'**elle est réalisée avec un étage et avec un système d'actionnement électrique, sur lequel l'unité de régulation agit directement.

5. Unité de soupapes selon l'une quelconque des revendications 1 à 4, **caractérisée en ce que** le capteur (43) est placé sur une carte de commande, laquelle pour sa part, est placée entre les deux soupapes à siège (24, 25).

6. Unité de soupapes selon l'une quelconque des revendications 1 à 5, **caractérisée en ce qu'**entre la grandeur d'entrée amenée à l'entrée de signal de commande de l'unité de régulation (21) et la section transversale d'ouverture des deux soupapes à siège (24, 25), il existe une relation non linéaire.

7. Unité de soupapes selon l'une quelconque des revendications 1 à 6, **caractérisée en ce que** le système de précontrainte agit avec des forces de précontrainte différentes sur les deux tiges de soupape (28, 29).

8. Unité de soupapes selon l'une quelconque des revendications 1 à 7, **caractérisée en ce que** le capteur (47) est un composant fonctionnel du système de précontrainte **en ce qu'**il est réalisé sous la forme d'un élément capteur à ressort intégral.

9. Servomoteur, comprenant un élément d'entraînement (2) susceptible d'être sollicité par un fluide sous pression et une unité de soupapes selon la revendication 1, régulant sa sollicitation, un espace de travail (6) de l'élément d'entraînement (2) étant relié avec le premier raccord (37) de l'unité de soupapes.
